(19) Europäisches Patentamt
European Patent Office
Office européen des brevets

(11) **EP 4 290 946 A1**

(12) **EUROPEAN PATENT APPLICATION**

(43) Date of publication:
**13.12.2023  Bulletin 2023/50**

(21) Application number: **23162009.7**

(22) Date of filing: **15.03.2023**

(51) International Patent Classification (IPC):
**H04W 64/00** (2009.01)     **H04W 76/14** (2018.01)

(52) Cooperative Patent Classification (CPC):
**H04W 64/00; H04W 76/14;** H04W 84/12;
H04W 88/08; H04W 92/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022  US 202263350304 P
08.06.2022  US 202263350289 P**

(71) Applicant: **Intel Corporation
Santa Clara, CA 95054 (US)**

(72) Inventors:
• **CORDEIRO, Carlos
Camas, 98607 (US)**
• **SEGEV, Yonathan
Sunnyvale, 94087 (US)**
• **LI, Qinghua
San Ramon, 94582 (US)**
• **SHABABO, Elad
Givat Ada (IL)**
• **YAGHOOBI, Hassan
San Jose, 95120 (US)**

(74) Representative: **Viering, Jentschura & Partner
mbB
Patent- und Rechtsanwälte
Am Brauhaus 8
01099 Dresden (DE)**

(54) **6 GHZ CLIENT TO CLIENT (C2C) USING FINE TIMING MEASUREMENT (FTM) PAIR IDENTIFICATION**

(57)    This disclosure describes systems, methods, and devices related to C2C using FTM. A device may determine a pair of client to client (C2C) devices within an indoor environment based on range measurements to a set of access points (APs). The device may select an operational channel for the C2C pair based on the range measurements.

FIG. 1

EP 4 290 946 A1

**Description**

## TECHNICAL FIELD

This disclosure generally relates to systems and methods for wireless communications and, more particularly, to 6 GHz client to client (C2C) using fine timing measurement (FTM) Pair Identification.

## BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

## BRIEF DESCRIPTION OF THE DRAWINGS

FIG. 1 is a network diagram illustrating an example network environment for C2C using FTM, in accordance with one or more example embodiments of the present disclosure.
FIG. 2 shows an example of a system.
FIG. 3 depicts an illustrative schematic diagram for C2C using FTM, in accordance with one or more example embodiments of the present disclosure.
FIG. 4 shows an exemplary signaling.
FIG. 5 shows an exemplary embodiment through a dedicated IEEE 802.11 information element C2C Pair.
FIG. 6 shows an example of a C2C Pair ID.
FIG. 7 shows an exemplary illustration of a Function field format.
FIGs, 2, 3-7 also depict illustrative schematic diagram for C2C using FTM, in accordance with one or more example embodiments of the present disclosure.
FIG. 8 illustrates a flow diagram of illustrative process for an illustrative C2C using FTM system, in accordance with one or more example embodiments of the present disclosure.
FIG. 9 illustrates a functional diagram of an exemplary communication station that may be suitable for use as a user device, in accordance with one or more example embodiments of the present disclosure.
FIG. 10 illustrates a block diagram of an example machine upon which any of one or more techniques (e.g., methods) may be performed, in accordance with one or more example embodiments of the present disclosure.
FIG. 11 is a block diagram of a radio architecture in accordance with some examples.
FIG. 12 illustrates an example front-end module circuitry for use in the radio architecture of FIG. 11, in accordance with one or more example embodiments of the present disclosure.
FIG. 13 illustrates an example radio IC circuitry for use in the radio architecture of FIG. 11, in accordance with one or more example embodiments of the present disclosure.
FIG. 14 illustrates an example baseband processing circuitry for use in the radio architecture of FIG. 11, in accordance with one or more example embodiments of the present disclosure.

## DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

The opening 6GHz band for indoors operation of unlicensed Wi-Fi presents a major milestone for the growth of Wi-Fi for the foreseeable future.

There are several operational modes which differ in their maximum allowed transmission power and the resulting link budget, range and associated maximum throughput.

Summary of the modes:

6GHz AFC operation - allows the use of standard power devices with the requirement to have a physically verified location and connected to an AFC data base updated daily for incumbent operation.

Low Power Indoor (LPI) - allows the use of 20dbm (and in some cases 23dbm) and require to be non-weatherproof and main power operated (i.e. no batteries).

Very Low Power (VLP) - the most restrictive mode with 14dbm maximum transmit power, roughly equivalent to Bluetooth power with no specific requirement.

The difference in maximum transmit power reflects the level of assurance for indoors operation which takes advantage from the signal decay induced by the building by that reducing interference to outdoors incumbents.

A protocol is being created for enablement of 6GHz C2C operation based on range measurement and positioning trilateration of the two Client STAs.

In this disclosure, a method is being identified for the overlaying enterprise network to associate the participants of a C2C pair (or a NAN network or a Wi-Fi Direct) such that the network (through the APs) can assign a channel for the C2C data exchange and power limits for its operation.

This kind of assignment allows multiple C2C pairs to operate with minimal interference to each other and to their surrounding network composed of APs and STAs that is the main data connectivity service.

Some further background of 6GHz C2C operation.

The LPI operation is highly attractive not only to Access Point (AP) to Station (STA) Wi-Fi operation configuration but also to Client to Client (C2C) Wi-Fi operation. However, since STAs are normally mobile and many time include a battery they are required to be assured indoors operation to enable C2C operation using the 6GHz band.

Today this requirement is facilitated by the reception of an Enabling Signal from an LPI AP.

However, with expectation of rolling by regulatory bodies of Received Signal Strength (RSSI) requirement ranging between -82dbm to -72dbm, the use of this method limits the availability and coverage of 6GHz C2C operation.

The reason for the highly restrictive RSSI enabling signal method is that the signal RSSI is highly variable and dependent on antenna pattern, device orientation, channel conditions and have a loose correlation as to the actual positioning of the device within a building (e.g. inside the building or outside, same height as the AP or 2 floors below).

In one or more embodiments, a C2C using FTM system may be targeted at solving or substantially reducing the inherent inaccuracy of RSSI based Enabling Signal for LPI and AFC operation by that allowing much better coverage for 6GHz C2C indoors operation.

First method, available today, to enable 6GHz C2C operation, client STA first associate to an LPI AP then based on this AP to STA 6GHz LPI enablement connects to each other, normally using TDLS (Tunneled Direct Link Service). This method requires association which is not necessary and furthermore not always available for example a bring your own device in enterprise environments.

Also, the availability and sustainability of a link to an AP has no bearing as to the presence.

A second method and the current ETSI rolling direction was to use RSSI enabling signal from AP with -82dbm to -72dbm as explained in the problem definition section, this method is problematic as it requires a strict signal propagation to the AP as experiments.

In both methods the enterprise network is unaware of the C2C connection, cannot manage it or assign an operational channel and cannot identify individual STAs that are part of the connection or part of the C2C network. Thus, the need for shared identifier is a moot point.

Furthermore, method one requires Association to AP, this requirement is hard to meet for many usage scenarios e.g. bring your own device in an enterprise environment, and impose an unnecessary operation requirements on the STA (larger memory, dual context). In addition to that it is hard to impossible for AP to manage the medium, and assign different C2C connections to different channels to prevent collisions with the existing data service and the C2C connections.

Moreover, the second method is both limiting in the coverage of the 6GHz C2C service due to the signal strength limitations as well as not providing any means to the AP to manage the spectrum for C2C operation, which is a major limiting factor for enablement of C2C operation in enterprise environment.

In some aspects, example embodiments of the present disclosure relate to systems, methods, and devices for 6GHz C2C using FTM.

In one embodiment, a C2C using FTM system may use the Wi-Fi Range measurement for the purpose of 6GHz C2C enablement.

The Wi-Fi Range protocol called Fine Timing Measurement, enables the direct placement of the device within a building and by doing so, is independent evaluation of the device position to within indoors environment vs. the previously proposed methods. The over the air signaling with the AP allows the AP to piggyback spectrum management frames to the client STAs, which is crucial to enterprise environments and to allow a much better user experience especially for low latency and high throughput links. Advantages may include:

Allows AP to piggyback signaling to manage channel selection and power control crucial for Enterprise environments.

FTM (the ranging protocol) is operational in both Associated and Unassociated modes, by that not imposing special requirements on the STAs.

Provides direct placement of STA within a building vs. indirect inference of proximity.

Does not require trust relationship to preexist to allow association to AP, by that ease the management of C2C connections for the IT operational teams.

Not limited to specific distance from AP such as the limitation imposed by the RSSI methods.

In some aspects, example embodiments of the present disclosure relate to systems, methods, and devices for 6 GHz C2C using FTM Pair Identification.

In one embodiment, a C2C using FTM system may facilitate a communication protocol extension to create a shared identifier across the STAs composing the C2C pair (or C2C network). The shared identifier allows the overlaying enterprise connectivity network (set of AP connected to create a network to provide the main internet connectivity data service) to correlate the STAs that are part of the C2C pair (or C2C network) and that are requesting a channel assignment for their shared C2C operation. This allows individual STAs to initiate an FTM session separately with the network and have the network determine their position, and using the shared identifier enables the network to identify members of this network and its physical footprint over the main data service network as well as other C2C pair/networks.

Some advantage to the C2C using FTM system include, but not limited to:

- Allow the network to identify the STAs that take part in the network by that allow the enterprise network to understand the physical overlap of C2C pair/network over the enterprise network and other C2C pairs - allow special reuse.
- The identifier is easy to create for example using a hash function that its inputs are the MAC addresses of the STAs or temporary MAC address of the STAs participating in the C2C pair or network.
- Allows reuse of the FTM protocol, which is already standardized in IEEE 802.11 and implemented and evaluated for interoperability in product through the WFA Location certification program.
- Symmetrical behavior amongst client STA (i.e., no coordinator and subordinate) avoids the need to assign different roles to STAs that are part of the C2C network. This has a huge benefit, it simplifies implementation and integration - no need to develop software for two cases into a single client STA and integrate them and interoperate them.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

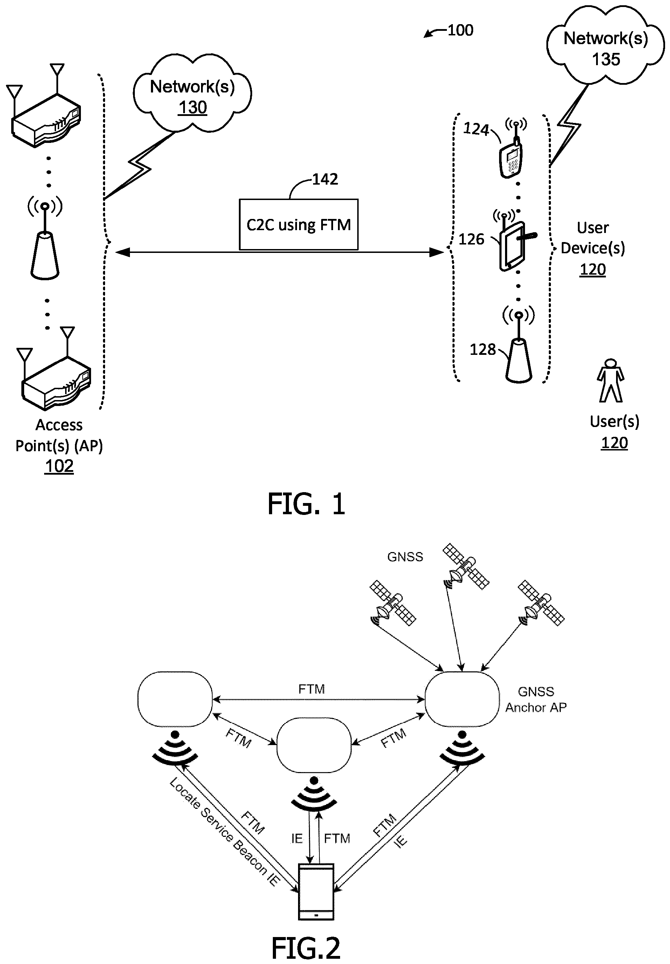

FIG. 1 is a network diagram illustrating an example network environment of C2C using FTM, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

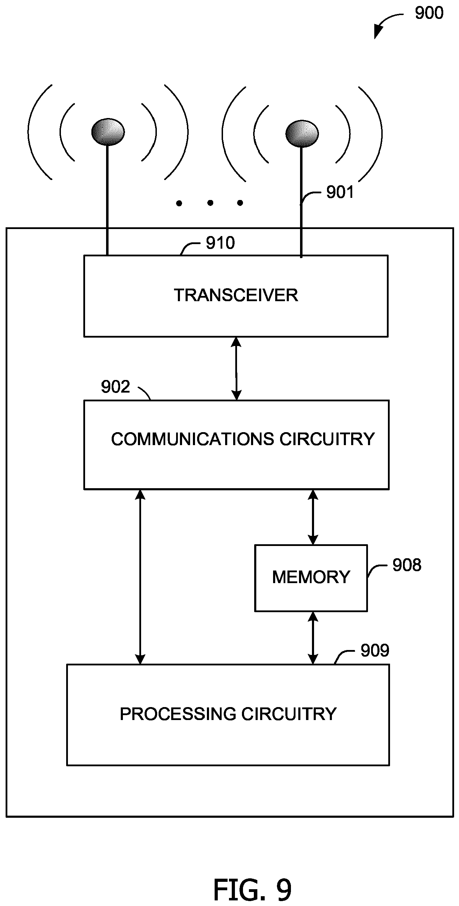

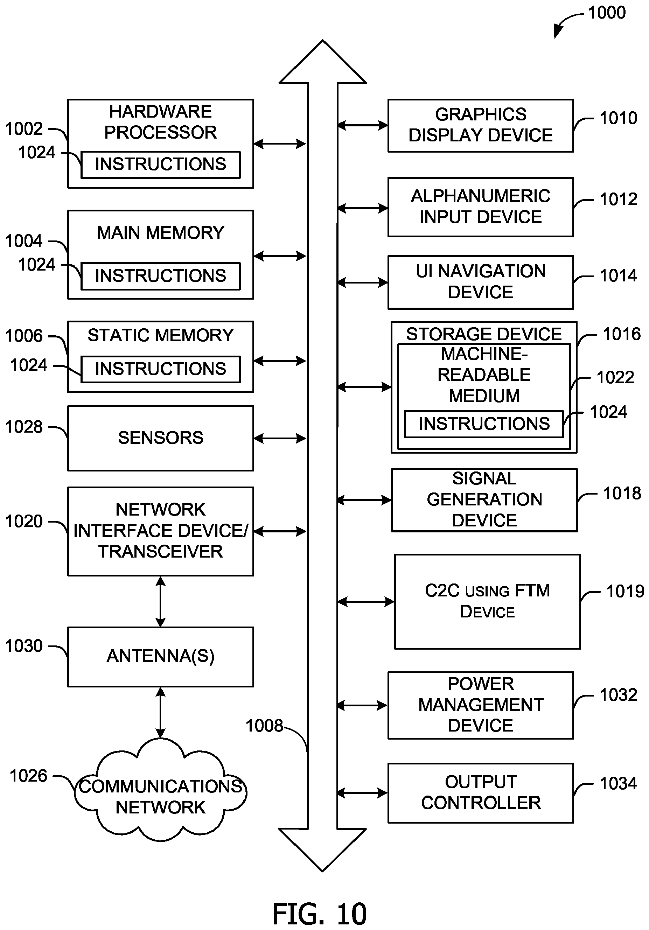

In some embodiments, the user devices 120 and the AP 102 may include one or more computer systems similar to that of the functional diagram of FIG. 9 and/or the example machine/system of FIG. 10.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook™ computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any obj ect (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasiomnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802. 11ac, 802.11ax, 802.11be, etc.), 6 GHz channels (e.g., 802.11ax, 802.11be, etc.), or 60 GHZ channels (e.g. 802.11ad, 802.11 ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a C2C using FTM 142 with one or more user devices 120. It is understood that the above descriptions are for purposes of illustration and are not meant to be limiting.

It is understood that the above descriptions are for purposes of illustration and are not meant to be limiting.

Some background on STA location in enterprise environment and market readiness. FIG. 2 shows an example of a system (open locate system) enabling positioning determination for client STAs. It is an exemplary illustration of a recently announced Open Locate system in the market (e.g. Aruba Open Locate). The system is a self-locating composed of APs facilitated with a special indoor GNSS chip, and conduct range measurement using FTM amongst the APs to further improve AP location and locate any remaining AP with poor GNSS reception. The system is available for all of such Wi-Fi 6e deployments and provides location for STAs as an indoor navigation at no further cost which makes it attractive to further use for other enterprise purposes and create an advantage for such network and clients that make use of those network capabilities. FIG. 2 shows a high level of this kind of network operation.

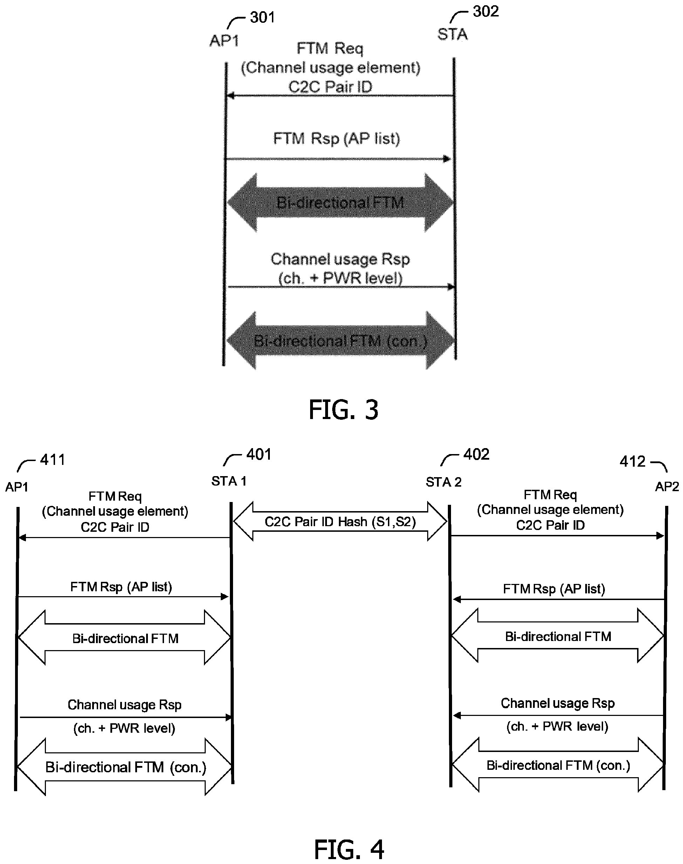

FIG. 3 depicts an illustrative schematic diagram for C2C using FTM, in accordance with one or more example embodiments of the present disclosure. The figure illustrates an embodiment of FTO operation for 6 GHz C2C Operation

By piggybacking the existing 802.11-2020 Channel Usage Element to FTM, the AP 301 receives an indication that the reason for FTM Request is to enable C2C possibly in the 6GHz and request a channel recommendation for the C2C link.

The FTM Response frame provides a list of APs the STA 302 should select from to determine its location. The FTM protocol is the 802.11az protocol and the assignment is a bidirectional LMR assignment meaning both the STA 302 and AP 301 receive mutual measurements to allow both network and client to determine the AP 301 and STA 302 range measurement.

As a result of the measurement the AP 301 sends a Channel Usage Rsp frame that includes a recommended operational channel and possibly a maximum transmit power to the STA 302.

The location determination may continue using FTM after the Channel Usage Response frame as the STA location within the building may change over time, this may lead to additional Channel Usage Response frames from AP 301 to client STA 302.

In one or more embodiments, a C2C using FTM system may facilitate a protocol to allow the determination of client STAs 302 within indoor environment based on range measurement to located APs 301 which enables 6GHz C2C operation.

In one or more embodiments, a C2C using FTM system may facilitate a protocol that signals the Wi-Fi ranging session purpose is 6GHz C2C channel assignment by inclusion of the Channel Usage Element to the FTM Request.

In one or more embodiments, a C2C using FTM system may facilitate a protocol where the FTM Response frame includes a set of APs for the STA 302 to select subset from for the purpose of setting additional FTM sessions for the purpose of 6GHz C2C operation.

In one or more embodiments, a C2C using FTM system may facilitate a protocol where the AP 301 makes an unsolicited Channel Usage Response frame upon determination of indoor positioning of the STA 302.

In one or more embodiments, a C2C using FTM system may facilitate a protocol which sends additional Channel Usage Response in response to movement of the STA 302, which includes a different recommended channel.

In one or more embodiments, a C2C using FTM system may facilitate a protocol which includes an indication of maximum transmit power to C2C operation.

FIG. 4 shows an exemplary signaling. The exemplary signaling may be for an exemplary C2C Pair ID Agreement.

FIG. 4 shows two STAs, STA 1 401 and STA 2 402 that using a hash function with the concatenation of their MAC addresses S1 and S2 create a C2C Pair ID, the C2C Pair ID is provided to the network through AP 1 411 and AP 2 412 such that the Channel Usage Response frame provides the same channel for both STAs 401, 402 for C2C operation.

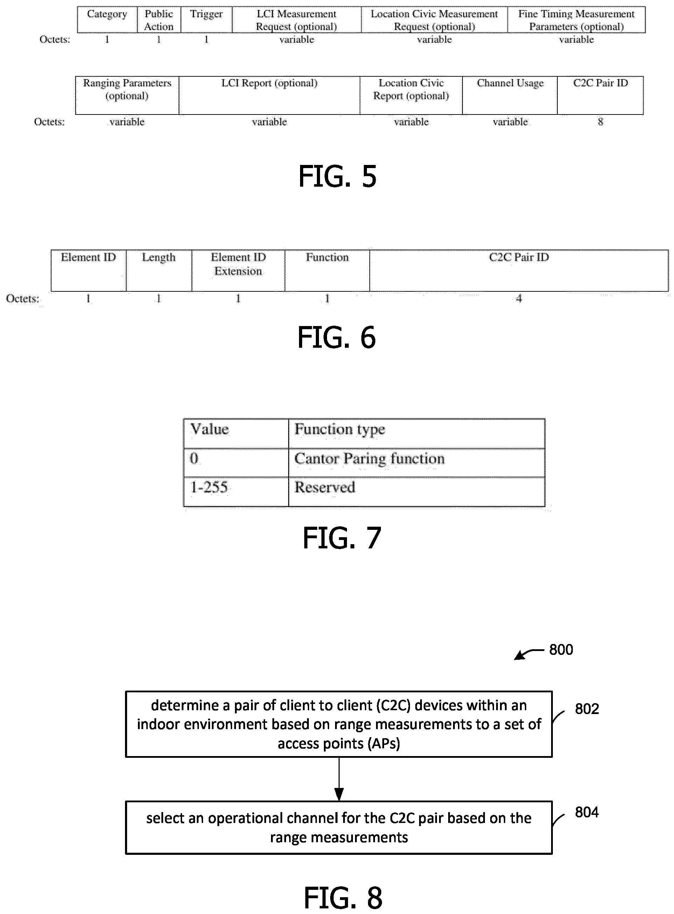

FIG. 5 shows an exemplary embodiment through a dedicated IEEE 802.11 information element C2C Pair. It is an embodiment of an exemplary Fine Timing Measurement Request Frame to include the C2C Pair ID. As seen from FIG. 5, the exemplary FTM request frame includes a category field, a public action field, a trigger field, an LCI measurement request field, a location civic measurement request field, a fine timing measurement parameters field, a ranging parameters field, an LCI report field, a location civic report field, a channel usage field, and a C2C Pair ID field. FIG. 6 shows an example of a C2C Pair ID. The C2C Pair ID may include an element ID field, a length field, an element ID extension field, a function field, and a C2C Pair ID field.

The function field indicate the function used to generate the C2C Pair ID, an exemplary of a Pair ID function generator is Cantor Pairing function.

$$\Pi(M1, M2) = \frac{M_1^2 + 3M_1 + 2M_1M_2 + M_2 + M_2^2}{2}$$

, where M1, M2 are the modulo 15 values of STA 1 (e.g. STA 401) MAC address and STA 2 (e.g. STA 402) MAC address respectively.

FIG. 7 shows an exemplary illustration of a Function field format showing a value corresponding to a function type.

In one or more embodiments, a system may facilitate a protocol to allow the determination of a tow or more client STAs (refer here in as C2C Pair) within indoor environment based on individual range measurement to a located set of APs which enables 6GHz C2C operation and that allows the network to select an operational channel for the C2C Pair based on their individual locations.

In one or more embodiments, a system may identify individual client STA request for C2C Pair channel Assignment as belonging to the same C2C Pair by the value of the C2C Pair ID included in an FTM Request Frame containing a Channel Usage Element and a C2C Pair ID element.

In one or more embodiments, a system may facilitate that the enterprise network composed of a set of APs, identifies and assign a channel to a set of clients previously identify themselves using C2C Pair ID.

In one or more embodiments, a system may associate a C2C Pair foot print based on set of range reports received at the network and C2C Pair ID.

In one or more embodiments, a system may facilitate that the STAs composing the C2C Pair network is greater than 2, and the first 2 STAs to the C2C Pair network defines a C2C Pair ID which is used by other later joiners to the C2C Pair network.

FIG. 8 illustrates a flow diagram of illustrative process 800 for a C2C using FTM system, in accordance with one or more example embodiments of the present disclosure.

At block 802, a device (e.g., the user device(s) 120 and/or the AP 102 of FIG. 1 and/or the C2C using FTM device 1019 of FIG. 10) may determine a pair of client to client (C2C) devices within an indoor environment based on range measurements to a set of access points (APs).

At block 804, the device may select an operational channel for the C2C pair based on the range measurements.

It is understood that the above descriptions are for purposes of illustration and are not meant to be limiting.

FIG. 9 shows a functional diagram of an exemplary communication station 900, in accordance with one or more example embodiments of the present disclosure. In one embodiment, FIG. 9 illustrates a functional block diagram of a communication station that may be suitable for use as an AP 102 (FIG. 1) or a user device 120 (FIG. 1) in accordance with some embodiments. The communication station 900 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 900 may include communications circuitry 902 and a transceiver 910 for transmitting and receiving signals to and from other communication stations using one or more antennas 901. The communications circuitry 902 may include circuitry that can operate the physical layer (PHY) communications and/or medium access control (MAC) communications for controlling access to the wireless medium, and/or any other communications layers for transmitting and receiving signals. The communication station 900 may also include processing circuitry 906 and memory 908 arranged to perform the operations described herein. In some embodiments, the communications circuitry 902 and the processing circuitry 906 may be configured to perform operations detailed in the above figures, diagrams, and flows.

In accordance with some embodiments, the communications circuitry 902 may be arranged to contend for a wireless medium and configure frames or packets for communicating over the wireless medium. The communications circuitry 902 may be arranged to transmit and receive signals. The communications circuitry 902 may also include circuitry for modulation/demodulation, upconversion/downconversion, filtering, amplification, etc. In some embodiments, the processing circuitry 906 of the communication station 900 may include one or more processors. In other embodiments, two or more antennas 901 may be coupled to the communications circuitry 902 arranged for sending and receiving signals. The memory 908 may store information for configuring the processing circuitry 906 to perform operations for configuring and transmitting message frames and performing the various operations described herein. The memory 908 may include any type of memory, including non-transitory memory, for storing information in a form readable by a machine (e.g., a computer). For example, the memory 908 may include a computer-readable storage device, read-only memory (ROM), random-access memory (RAM), magnetic disk storage media, optical storage media, flash-memory devices and other storage devices and media.

In some embodiments, the communication station 900 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 900 may include one or more antennas 901. The antennas 901 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 900 may include one or more of a keyboard, a display, a non-volatile memory port, multiple antennas, a graphics processor, an application processor, speakers, and other mobile device elements. The display may be an LCD screen including a touch screen.

Although the communication station 900 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 900 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 900 may include one or more processors and may be configured with instructions stored on a computer-readable storage device.

FIG. 10 illustrates a block diagram of an example of a machine 1000 or system upon which any one or more of the techniques (e.g., methodologies) discussed herein may be performed. In other embodiments, the machine 1000 may operate as a standalone device or may be connected (e.g., networked) to other machines. In a networked deployment, the machine 1000 may operate in the capacity of a server machine, a client machine, or both in server-client network environments. In an example, the machine 1000 may act as a peer machine in peer-to-peer (P2P) (or other distributed) network environments. The machine 1000 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1000 may include a hardware processor 1002 (e.g., a central processing unit (CPU), a graphics processing unit (GPU), a hardware processor core, or any combination thereof), a main memory 1004 and a static memory 1006, some or all of which may communicate with each other via an interlink (e.g., bus) 1008. The machine 1000 may further include a power management device 1032, a graphics display device 1010, an alphanumeric input device 1012 (e.g., a keyboard), and a user interface (UI) navigation device 1014 (e.g., a mouse). In an example, the graphics display device 1010, alphanumeric input device 1012, and UI navigation device 1014 may be a touch screen display. The machine 1000 may additionally include a storage device (i.e., drive unit) 1016, a signal generation device 1018 (e.g., a speaker), a C2C using FTM device 1019, a network interface device/transceiver 1020 coupled to antenna(s) 1030, and one or more sensors 1028, such as a global positioning system (GPS) sensor, a compass, an accelerometer, or other sensor. The machine 1000 may include an output controller 1034, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1002 for generation and processing of the baseband signals and for controlling operations of the main memory 1004, the storage device 1016, and/or the C2C using FTM device 1019. The baseband processor may be provided on a single radio card, a single chip, or an integrated circuit (IC).

The storage device 1016 may include a machine readable medium 1022 on which is stored one or more sets of data structures or instructions 1024 (e.g., software) embodying or utilized by any one or more of the techniques or functions described herein. The instructions 1024 may also reside, completely or at least partially, within the main memory 1004, within the static memory 1006, or within the hardware processor 1002 during execution thereof by the machine 1000. In an example, one or any combination of the hardware processor 1002, the main memory 1004, the static memory 1006, or the storage device 1016 may constitute machine-readable media.

The C2C using FTM device 1019 may carry out or perform any of the operations and processes (e.g., process 800) described and shown above.

It is understood that the above are only a subset of what the C2C using FTM device 1019 may be configured to perform and that other functions included throughout this disclosure may also be performed by the C2C using FTM device 1019.

While the machine-readable medium 1022 is illustrated as a single medium, the term "machine-readable medium" may include a single medium or multiple media (e.g., a centralized or distributed database, and/or associated caches and servers) configured to store the one or more instructions 1024.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1000 and that cause the machine 1000 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1024 may further be transmitted or received over a communications network 1026 using a transmission medium via the network interface device/transceiver 1020 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, and peer-to-peer (P2P) networks, among others. In an example, the network interface device/transceiver 1020 may include one or more physical jacks (e.g., Ethernet, coaxial, or phone jacks) or one or more antennas to connect to the communications network 1026. In an example, the network interface device/transceiver 1020 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1000 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

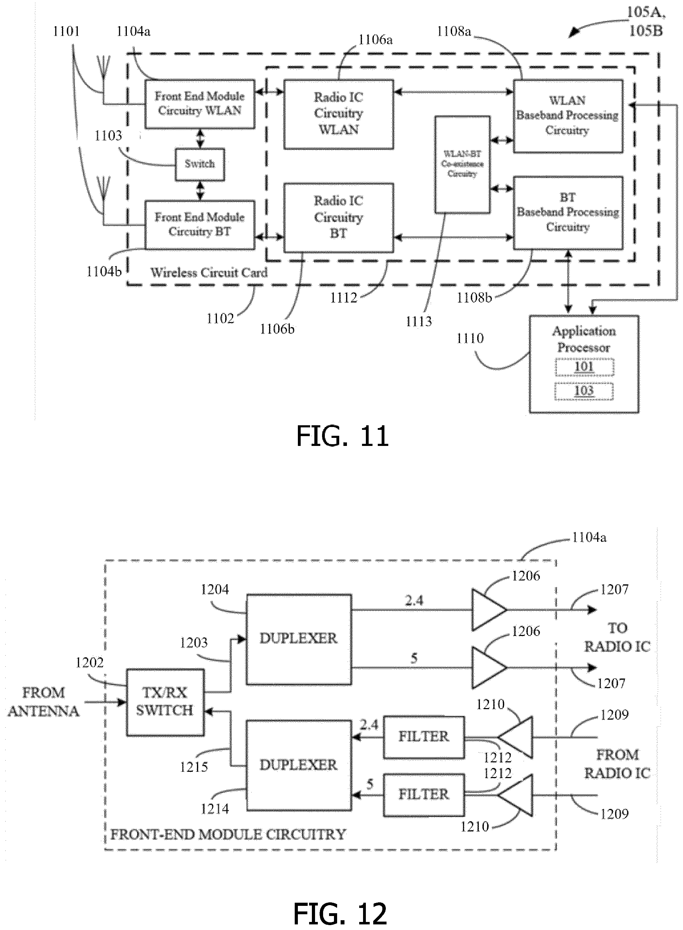

FIG. 11 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1104a-b, radio IC circuitry 1106a-b and baseband processing circuitry 1108a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1104a-b may include a WLAN or Wi-Fi FEM circuitry 1104a and a Bluetooth (BT) FEM circuitry 1104b. The WLAN FEM circuitry 1104a may include a receive signal path comprising circuitry configured to operate on WLAN RF signals received from one or more antennas 1101, to amplify the received signals and to provide the amplified versions of the received signals to the WLAN radio IC circuitry 1106a for further processing. The BT FEM circuitry 1104b may include a receive signal path which may include circuitry configured to operate on BT RF signals received from one or more antennas 1101, to amplify the received signals and to provide the amplified versions of the received signals to the BT radio IC circuitry 1106b for further processing. FEM circuitry 1104a may also include a transmit signal path which may include circuitry configured to amplify WLAN signals provided by the radio IC circuitry 1106a for wireless transmission by one or more of the antennas 1101. In addition, FEM circuitry 1104b may also include a transmit signal path which may include circuitry configured to amplify BT signals provided by the radio IC circuitry 1106b for wireless transmission by the one or more antennas. In the embodiment of FIG. 11, although FEM 1104a and FEM 1104b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1106a-b as shown may include WLAN radio IC circuitry 1106a and BT radio IC circuitry 1106b. The WLAN radio IC circuitry 1106a may include a receive signal path which may include circuitry to down-convert WLAN RF signals received from the FEM circuitry 1104a and provide baseband signals to WLAN baseband processing circuitry 1108a. BT radio IC circuitry 1106b may in turn include a receive signal path which may include circuitry to down-convert BT RF signals received from the FEM circuitry 1104b and provide baseband signals to BT baseband processing circuitry 1108b. WLAN radio IC circuitry 1106a may also include a transmit signal path which may include circuitry to up-convert WLAN baseband signals provided by the WLAN baseband processing circuitry 1108a and provide WLAN RF output signals to the FEM circuitry 1104a for subsequent wireless transmission by the one or more antennas 1101. BT radio IC circuitry 1106b may also include a transmit signal path which may include circuitry to up-convert BT baseband signals provided by the BT baseband processing circuitry 1108b and provide BT RF output signals to the FEM circuitry 1104b for subsequent wireless transmission by the one or more antennas 1101. In the embodiment of FIG. 11, although radio IC circuitries 1106a and 1106b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1108a-b may include a WLAN baseband processing circuitry 1108a and a BT baseband processing circuitry 1108b. The WLAN baseband processing circuitry 1108a may include a memory, such as, for example, a set of RAM arrays in a Fast Fourier Transform or Inverse Fast Fourier Transform block (not shown) of the WLAN baseband processing circuitry 1108a. Each of the WLAN baseband circuitry 1108a and the BT baseband circuitry 1108b may further include one or more processors and control logic to process the signals received from the corresponding WLAN or BT receive signal path of the radio IC circuitry 1106a-b, and to also generate corresponding WLAN or BT baseband signals for the transmit signal path of the radio IC circuitry 1106a-b. Each of the baseband processing circuitries 1108a and 1108b may further include physical layer (PHY) and medium access control layer (MAC) circuitry, and may further interface with a device for generation and processing of the baseband signals and for controlling operations of the radio IC circuitry 1106a-b.

Referring still to FIG. 11, according to the shown embodiment, WLAN-BT coexistence circuitry 1113 may include logic providing an interface between the WLAN baseband circuitry 1108a and the BT baseband circuitry 1108b to enable use cases requiring WLAN and BT coexistence. In addition, a switch 1103 may be provided between the WLAN FEM circuitry 1104a and the BT FEM circuitry 1104b to allow switching between the WLAN and BT radios according to application needs. In addition, although the antennas 1101 are depicted as being respectively connected to the WLAN FEM circuitry 1104a and the BT FEM circuitry 1104b, embodiments include within their scope the sharing of one or more antennas as between the WLAN and BT FEMs, or the provision of more than one antenna connected to each of FEM 1104a or 1104b.

In some embodiments, the front-end module circuitry 1104a-b, the radio IC circuitry 1106a-b, and baseband processing circuitry 1108a-b may be provided on a single radio card, such as wireless radio card 1102. In some other embodiments, the one or more antennas 1101, the FEM circuitry 1104a-b and the radio IC circuitry 1106a-b may be provided on a single radio card. In some other embodiments, the radio IC circuitry 1106a-b and the baseband processing circuitry 1108a-b may be provided on a single chip or integrated circuit (IC), such as IC 1112.

In some embodiments, the wireless radio card 1102 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for highefficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1108b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 12 illustrates WLAN FEM circuitry 1104a in accordance with some embodiments. Although the example of FIG. 12 is described in conjunction with the WLAN FEM circuitry 1104a, the example of FIG. 12 may be described in conjunction with the example BT FEM circuitry 1104b (FIG. 11), although other circuitry configurations may also be suitable.

In some embodiments, the FEM circuitry 1104a may include a TX/RX switch 1202 to switch between transmit mode and receive mode operation. The FEM circuitry 1104a may include a receive signal path and a transmit signal path. The receive signal path of the FEM circuitry 1104a may include a low-noise amplifier (LNA) 1206 to amplify received RF signals 1203 and provide the amplified received RF signals 1207 as an output (e.g., to the radio IC circuitry 1106a-b (FIG. 11)). The transmit signal path of the circuitry 1104a may include a power amplifier (PA) to amplify input RF signals 1209 (e.g., provided by the radio IC circuitry 1106a-b), and one or more filters 1212, such as band-pass filters (BPFs), low-pass filters (LPFs) or other types of filters, to generate RF signals 1215 for subsequent transmission (e.g., by one or more of the antennas 1101 (FIG. 11)) via an example duplexer 1214.

In some dual-mode embodiments for Wi-Fi communication, the FEM circuitry 1104a may be configured to operate in either the 2.4 GHz frequency spectrum or the 5 GHz frequency spectrum. In these embodiments, the receive signal path of the FEM circuitry 1104a may include a receive signal path duplexer 1204 to separate the signals from each spectrum as well as provide a separate LNA 1206 for each spectrum as shown. In these embodiments, the transmit signal path of the FEM circuitry 1104a may also include a power amplifier 1210 and a filter 1212, such as a BPF, an LPF or another type of filter for each frequency spectrum and a transmit signal path duplexer 1204 to provide the signals of one of the different spectrums onto a single transmit path for subsequent transmission by the one or more of the antennas 1101 (FIG. 11). In some embodiments, BT communications may utilize the 2.4 GHz signal paths and may utilize the same FEM circuitry 1104a as the one used for WLAN communications.

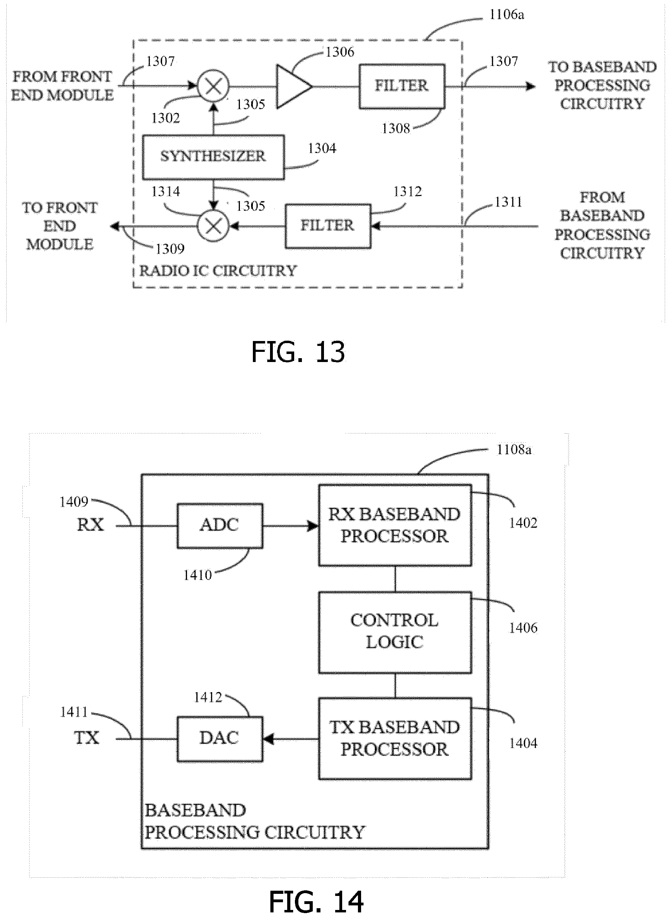

FIG. 13 illustrates radio IC circuitry 1106a in accordance with some embodiments. The radio IC circuitry 1106a is one example of circuitry that may be suitable for use as the WLAN or BT radio IC circuitry 1106a/1106b (FIG. 11), although other circuitry configurations may also be suitable. Alternatively, the example of FIG. 13 may be described in conjunction with the example BT radio IC circuitry 1106b.

In some embodiments, the radio IC circuitry 1106a may include a receive signal path and a transmit signal path. The receive signal path of the radio IC circuitry 1106a may include at least mixer circuitry 1302, such as, for example, down-conversion mixer circuitry, amplifier circuitry 1306 and filter circuitry 1308. The transmit signal path of the radio IC circuitry 1106a may include at least filter circuitry 1312 and mixer circuitry 1314, such as, for example, upconversion mixer circuitry. Radio IC circuitry 1106a may also include synthesizer circuitry 1304 for synthesizing a frequency 1305 for use by the mixer circuitry 1302 and the mixer circuitry 1314. The mixer circuitry 1302 and/or 1314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 13 illustrates only a simplified version of a radio IC circuitry, and may include, although not shown, embodiments where each of the depicted circuitries may include more than one component. For instance, mixer circuitry 1314 may each include one or more mixers, and filter circuitries 1308 and/or 1312 may each include one or more filters, such as one or more BPFs and/or LPFs according to application needs. For example, when mixer circuitries are of the direct-conversion type, they may each include two or more mixers.

In some embodiments, mixer circuitry 1302 may be configured to down-convert RF signals 1207 received from the FEM circuitry 1104a-b (FIG. 11) based on the synthesized frequency 1305 provided by synthesizer circuitry 1304. The amplifier circuitry 1306 may be configured to amplify the down-converted signals and the filter circuitry 1308 may include an LPF configured to remove unwanted signals from the down-converted signals to generate output baseband signals 1307. Output baseband signals 1307 may be provided to the baseband processing circuitry 1108a-b (FIG. 11) for further processing. In some embodiments, the output baseband signals 1307 may be zero-frequency baseband signals, although this is not a requirement. In some embodiments, mixer circuitry 1302 may comprise passive mixers, although the scope of the embodiments is not limited in this respect.

In some embodiments, the mixer circuitry 1314 may be configured to up-convert input baseband signals 1311 based on the synthesized frequency 1305 provided by the synthesizer circuitry 1304 to generate RF output signals 1209 for the FEM circuitry 1104a-b. The baseband signals 1311 may be provided by the baseband processing circuitry 1108a-b and may be filtered by filter circuitry 1312. The filter circuitry 1312 may include an LPF or a BPF, although the scope of the embodiments is not limited in this respect.

In some embodiments, the mixer circuitry 1302 and the mixer circuitry 1314 may each include two or more mixers and may be arranged for quadrature downconversion and/or upconversion respectively with the help of synthesizer 1304. In some embodiments, the mixer circuitry 1302 and the mixer circuitry 1314 may each include two or more mixers each configured for image rejection (e.g., Hartley image rejection). In some embodiments, the mixer circuitry 1302 and the mixer circuitry 1314 may be arranged for direct down-conversion and/or direct upconversion, respectively. In some embodiments, the mixer circuitry 1302 and the mixer circuitry 1314 may be configured for super-heterodyne operation, although this is not a requirement.

Mixer circuitry 1302 may comprise, according to one embodiment: quadrature passive mixers (e.g., for the in-phase (I) and quadrature phase (Q) paths). In such an embodiment, RF input signal 1207 from FIG. 13 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1305 of synthesizer 1304 (FIG. 13). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1207 (FIG. 12) may comprise a balanced signal, although the scope of the embodiments is not limited in this respect. The I and Q baseband output signals may be provided to low-noise amplifier, such as amplifier circuitry 1306 (FIG. 13) or to filter circuitry 1308 (FIG. 13).

In some embodiments, the output baseband signals 1307 and the input baseband signals 1311 may be analog baseband signals, although the scope of the embodiments is not limited in this respect. In some alternate embodiments, the output baseband signals 1307 and the input baseband signals 1311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1304 may be a fractional-N synthesizer or a fractional N/N+1 synthesizer, although the scope of the embodiments is not limited in this respect as other types of frequency synthesizers may be suitable. For example, synthesizer circuitry 1304 may be a delta-sigma synthesizer, a frequency multiplier, or a synthesizer comprising a phase-locked loop with a frequency divider. According to some embodiments, the synthesizer circuitry 1304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1304 may be provided by a voltage controlled oscillator (VCO), although that is not a requirement. A divider control input may further be provided by either the baseband processing circuitry 1108a-b (FIG. 11) depending on the desired output frequency 1305. In some embodiments, a divider control input (e.g., N) may be determined from a look-up table (e.g., within a Wi-Fi card) based on a channel number and a channel center frequency as determined or indicated by the example application processor 1110. The application processor 1110 may include, or otherwise be connected to, one of the example secure signal converter 101 or the example received signal converter 103 (e.g., depending on which device the example radio architecture is implemented in).

In some embodiments, synthesizer circuitry 1304 may be configured to generate a carrier frequency as the output frequency 1305, while in other embodiments, the output frequency 1305 may be a fraction of the carrier frequency (e.g., one-half the carrier frequency, one-third the carrier frequency). In some embodiments, the output frequency 1305 may be a LO frequency (fLO).

FIG. 14 illustrates a functional block diagram of baseband processing circuitry 1108a in accordance with some embodiments. The baseband processing circuitry 1108a is one example of circuitry that may be suitable for use as the baseband processing circuitry 1108a (FIG. 11), although other circuitry configurations may also be suitable. Alternatively, the example of FIG. 13 may be used to implement the example BT baseband processing circuitry 1108b of FIG. 11.

The baseband processing circuitry 1108a may include a receive baseband processor (RX BBP) 1402 for processing receive baseband signals 1309 provided by the radio IC circuitry 1106a-b (FIG. 11) and a transmit baseband processor (TX BBP) 1404 for generating transmit baseband signals 1311 for the radio IC circuitry 1106a-b. The baseband processing circuitry 1108a may also include control logic 1406 for coordinating the operations of the baseband processing circuitry 1108a.

In some embodiments (e.g., when analog baseband signals are exchanged between the baseband processing circuitry 1108a-b and the radio IC circuitry 1106a-b), the baseband processing circuitry 1108a may include ADC 1410 to convert analog baseband signals 1409 received from the radio IC circuitry 1106a-b to digital baseband signals for processing by the RX BBP 1402. In these embodiments, the baseband processing circuitry 1108a may also include DAC 1412 to convert digital baseband signals from the TX BBP 1404 to analog baseband signals 1411.

In some embodiments that communicate OFDM signals or OFDMA signals, such as through baseband processor 1108a, the transmit baseband processor 1404 may be configured to generate OFDM or OFDMA signals as appropriate for transmission by performing an inverse fast Fourier transform (IFFT). The receive baseband processor 1402 may be configured to process received OFDM signals or OFDMA signals by performing an FFT. In some embodiments, the receive baseband processor 1402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 11, in some embodiments, the antennas 1101 (FIG. 11) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1101 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, singlecarrier CDMA, multi-carrier CDMA, multi-carrier modulation (MDM), discrete multi-tone (DMT), Bluetooth®, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: determine a pair of client to client (C2C) devices within an indoor environment based on range measurements to a set of access points (APs); and select an operational channel for the C2C pair based on the range measurements.

Example 2 may include the device of example 1 and/or some other example herein, wherein the determination may be based on 6 GHz C2C operation.

Example 3 may include the device of example 1 and/or some other example herein, wherein the processing circuitry may be further configured to identify individual client station device (STA) request for a C2C pair channel assignment as belonging to the pair of C2C devices.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: determining a pair of client to client (C2C) devices within an indoor environment based on range measurements to a set of access points (APs); and selecting an operational channel for the C2C pair based on the range measurements.

Example 7 may include the non-transitory computer-readable medium of example 6 and/or some other example herein, wherein the determination may be based on 6 GHz C2C operation.

Example 8 may include the non-transitory computer-readable medium of example 6 and/or some other example herein, wherein the operations further comprise identifying individual client station device (STA) request for a C2C pair channel assignment as belonging to the pair of C2C devices.

Example 9 may include a method comprising: determining, by one or more processors, a pair of client to client (C2C) devices within an indoor environment based on range measurements to a set of access points (APs); and selecting an operational channel for the C2C pair based on the range measurements.

Example 10 may include the method of example 9 and/or some other example herein, wherein the determination may be based on 6 GHz C2C operation.

Example 11 may include the method of example 9 and/or some other example herein, further comprising identifying individual client station device (STA) request for a C2C pair channel assignment as belonging to the pair of C2C devices.

Example 12 may include an apparatus comprising means for: determining a pair of client to client (C2C) devices within an indoor environment based on range measurements to a set of access points (APs); and selecting an operational channel for the C2C pair based on the range measurements.

Example 13 may include the apparatus of example 12 and/or some other example herein, wherein the determination may be based on 6 GHz C2C operation.

Example 14 may include the apparatus of example 12 and/or some other example herein, further comprising identifying individual client station device (STA) request for a C2C pair channel assignment as belonging to the pair of C2C devices.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

Example 22 may include the device of any one of examples 1 to 5, wherein the range measurements comprise fine timing measurements.

Example 23 may include the device of any one of examples 1 to 5, or 22, wherein the operational channel is selected based on individual locations of the pair of C2C devices.

Example 24 may include the device of any one of examples 1 to 5 or 22 to 23, wherein the processing circuitry is further configured to identify the pair of C2C devices based on a received identifier representative of the pair.

Example 25 may include the device of any one of examples 1 to 5 or 22 to 24, wherein the processing circuitry is further configured to receive a fine timing measurement request frame from one of the pair of C2C devices, wherein the received fine timing measurement request frame comprises the received identifier representative of the pair.

Example 26 may include the device of example 25, wherein the received fine timing measurement request frame comprises a channel usage element.

Example 27 may include the device of example 25 or example 26, wherein the identifier is obtained using a hash function with concatenation of medium access control (MAC) addresses of each of the C2C devices.

Example 28 may include the device of any one of examples 25 to 27, wherein the fine timing measurement request frame further comprises a field representative of a function used to generate the identifier.

Example 29 may include the device of any one of claims 1 to 5, or 22 to 28, wherein the processing circuitry is configured to select an allowed transmit power level for the C2C pair based on the range measurements.

Example 30 may include an apparatus of an access point (AP) configured for operation in an IEEE 802.11 based network, the apparatus comprising: a radio frequency (RF) interface and the device of any one of examples 1 to 5 or 22 to 29.

Example 31 may include the apparatus of example 30, wherein the processing circuitry is further configured to cause the AP to correlate the C2C devices of the C2C pair via further APs of the IEEE 802.11 based network.

Client to client (C2C) may refer to the direct communication between two Wi-Fi devices (e.g. Client STAs) without the involvement of an AP (e.g. 102). This type of communication may include ad-hoc mode.

AFC may refer to automatic frequency coordination that may provide a control mechanism to prevent harmful interference to (e.g. fixed) microwave links that operate in a frequency band (e.g. 6 GHz.).

Fine Timing Measurement (FTM) may refer to a procedure that may allow a STA to determine its distance from another STA. FTM may allow a STA to measure the round trip time (RTT) between the STA and another STA. With the regular transfer of FTM frames it is possible for the recipient STA to track changes in its relative location with other STAs in the environment. In some aspects, a STA may perform the procedure with multiple STAs, of which their locations are known, in order to obtain its location. In some further aspects, the FTM procedure may allow a STA to determine its range, relative range and its direction to or from another STA using Time of Flight (TOF) time difference of arrival and phase measurement.

In an instance of an FTM procedure between an initiating STA (ISTA) and a responding STA (RSTA) along with the associated scheduling and operational parameters of that instance (i.e. parameters of a Fine Timing Measurement Parameters element), which may be referred to as an FTM session. The FTM session may include a negotiation, measurement exchange and termination. A STA may have multiple concurrent FTM sessions, which the concurrent FTM sessions may occur with RSTAs that are members of different BSSs and different ESSs, or outside of a BSS, each session using its own scheduling, channel and operational parameters.

In an FTM negotiation, in order to initiate an FTM procedure, the ISTA may transmit an FTM request frame. After transmission of the FTM request frame (which may be an initial FTM request frame), the ISTA may be ready to receive a Fine Timing Measurement frame (FTM frame). An RSTA may not transmit FTM frames addressed to a peer STA unless the RSTA has received an initial FTM request frame from the peer STA. In some aspects, the initial FTM request frame may have a trigger field set to 1 and a set of scheduling parameters in an FTM Parameters element describing the ISTA's availability for measurement exchange. The first FTM frame in the FTM session may be called the initial FTM frame. The RSTA may transmit an initial FTM frame within 10 ms in response to a received initial FTM request frame.

In more detail, for some aspects an FTM Request frame may include a first octet for a category field corresponding to the action field of the frame, a second octet for a public action field (i.e. FTM request has a field value of 32), a third octet for a trigger field (with a value of 1) indicating that the ISTA requests that the RSTA start or continue sending FTM frames, while the trigger field set to 0 indicates that ISTA requests that the RSTA stop sending FTM frames, an optional LCI Measurement request field (of a variable size), an optional Civic Measurement Request field (of a variable size), and an optional FTM Parameters field (c.f. FTM Parameters element).

Presently, an FTM Parameters element may include a first octet for an element ID, a second octet for a length, and further octets (9 octets) for FTM parameters. The FTM parameters field may include information representative of, exemplarily in accordance with the given order BX corresponding the X numbered bit, status indication (B0, B1), value (B2-B6), a reserved (B7), a number of burst exponents (B8-B11), a burst duration (B12-B15), a min delta FTM (B16-B23), a partial TSF timer (B24-B39), a partial TSF (timing synchronization function) timer no preference (B40), an ASAP Capable (B41), an ASAP (B42), an FTMs per Burst (B43-B47), a further reserved (B48, B49), a format and bandwidth (B50-B55), and a burst period (B56-B71). An initial Fine Timing Measurement Request (FTM Request) frame includes an FTM Parameters element. A STA might have multiple concurrent FTM sessions. Concurrent FTM sessions might occur with responding STAs that are members of different basic service sets (BSSs) and possibly different extended service sets (ESSs), or possibly outside of a BSS, each session using its own scheduling, channel and operational parameters.

Presently, a channel usage element may represent (e.g. define) the channel usage information for BSSs that are not infrastructure BSSs or an off channel TDLS direct link. A channel usage element may include a first octet for an element ID, a second octet for a length, a third octet for a usage mode, and further 2n octets for channel entry. The usage mode field may be a number that identifies the usage of the recommended channels listed in respective fields (i.e. Operating Class/Channel Number pair fields), such as a first number (e.g. value 0) representative of a noninfrastructure IEEE 802.11 network or a second number (e.g. value 1) representative of an off-channel TDLS direct link). The other usage mode fields are currently reserved for future use. The channel entry field may include zero or more operating class and channel fields, which in some aspects may be combined (i.e. grouped together) to identify a noncontiguous channel. An operating class and channel field may indicate an operating class and channel. An operating class may be interpreted in the context of the country specified in the corresponding beacon frame. A channel field may indicate a channel number that may be interpreted in the context of the indicated operating class.

In accordance with IEEE 802.11 specifications (e.g. IEEE 802.11-2016, IEEE 802.11-2020), a channel usage element can be included in a probe request frame, a probe response frame, channel usage request frame, or a channel usage response frame. For example, a non-AP STA that supports channel usage and is not associated to an AP prior to using a noninfrasturcture network or an off channel TDLS direct link may transmit a probe request frame including channel usage elements. A non-AP STA supporting channel usage may send a channel usage request frame at any time after association to the AP that supports the use of channel usage to request the channel usage information for supported operating classes. Upon receipt of a channel usage element in the probe request frame, the AP supporting channel usage may send a probe response frame including one or more channel usage elements. Similarly, upon receiving a channel usage request frame, the AP supporting channel usage shall send a channel usage response frame including one or more channel usage elements.

In accordance with IEEE 802.11 specifications (e.g. IEEE 802.11-2016, IEEE 802.11-2020), a channel usage request frame is a frame that may be sent to an AP by a non-AP STA to request channel usage information. Presently, a channel usage request frame may include a first octet for a category field corresponding to the action field of the frame, a second octet for a wireless network management action field (i.e. channel usage request has a field value of 21), a third octet for a dialog token, the dialog token field is a nonzero value chosen by the non-AP STA sending the channel usage request frame to identify the request/response transaction, a variable sized channel usage elements field including one or more channel usage elements, a supported operating classes element including a supported operating classes element to indicate the supported operating classes for the request network type, consistent with the country element advertised by the AP.

In accordance with IEEE 802.11 specifications (e.g. IEEE 802.11-2016, IEEE 802.11-2020), a channel usage response frame is a frame that may be sent by an AP in response to a channel usage request frame, or autonomously. A channel usage response frame may include a first octet for a category field corresponding to the action field of the frame, a second octet for a wireless network management action field (i.e. channel usage response has a field value of 22), a third octet for a dialog token, the dialog token being a field with a nonzero value received in the corresponding channel usage request frame if the channel usage response frame is transmitted in response to a channel usage request frame or the field is zero if the channel usage response is being transmitted other than in response to a channel usage request frame, a variable sized channel usage elements field, a further three octets for a country string representative of a country, an optional field of 3 octets for power constraint element, an optional field of 20 octets for EDCA parameter set element, and an optional variable sized field for transmit power envelope element.

Broadly, channel usage information is a set of channels provided by an AP to non-AP STA for operation of a noninfrastructure network or an off-channel TDLS direct link. The channel usage information provided by the AP to the non-AP STA is to advise the STA on how to co-exist with the infrastructure network. A non-AP STA that supports channel usage may send a channel usage request frame at any time after association to the AP that supports the use of channel usage to request channel usage information for supported operating classes. The AP may send a channel usage response frame including one or more channel usage elements upon receiving a channel usage response frame. Channel Usage elements may include channels that are valid for the regulatory domain in which the AP transmitting the element is operating and consistent with the corresponding country element. When a channel usage element in a received channel usage request frame includes one or more operating class/channel pair fields, these fields may indicate the requested non-AP STA operating class/channels for the usage mode indicated in the frame.

With respect to the measurement exchange of the FTM procedure, in some aspects, the ISTA may indicate, during each burst instance, its availability by transmitting an FTM request frame. During each burst instance the RSTA may transmit one or more FTM frames as negotiated. The time windows during which time of departure (TOD) measurement for the transmission of the FTM frame and the time of arrival (TOA) measurement on the receipt of acknowledgment corresponding to the transmitted FTM frame are performed may be referred to as burst instances.

Spectrum management frames may refer to Spectrum Management Action frames that are configured for spectrum management. A spectrum management action field value provided in a frame may define the format of the frame. Presently, values and respective descriptions are: 0 represents a spectrum measurement request, 1 represents a spectrum measurement report, 2 represents a TPC (transmit power control) request, 3 represents a TPC report, 4 represents a channel switch announcement. A spectrum measurement request frame may be transmitted to request another STA to measure one or more channels. A spectrum measurement report frame may be transmitted in response to a spectrum measurement request frame, or autonomously, for providing measurement information. A TPC request frame may be transmitted requesting another STA for transmit power and link margin information. A TPC report frame may be transmitted in response to a TPC request frame. A channel switch announcement frame may be transmitted to advertise a channel switch.

In an associated mode, a STA may be connected to an AP and may actively participate in the network. The STA is able to send and receive data, access network resources, and communicate with other STAs in the network. In an unassociated mode, a STA is not connected to an AP and does not actively participate in the network. The STA is unable to send or receive data to the network and cannot access network resources or communicate with other STAs.

In some further aspects, LMR may refer to a location measurement report. In some further aspects, an FTM request frame (e.g. initial FTM request frame) and/or an FTM frame (e.g. initial FTM frame) may include a ranging parameters element. A ranging parameter element may include a first octet for an element ID, a second octet for a length, further octets (7 octets) for ranging parameters, and ranging sub elements with a variable size.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computerimplemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

**Claims**

1. A device comprising processing circuitry coupled to storage, the processing circuitry configured to:

   determine a pair of client to client (C2C) devices based on range measurements to a set of access points (APs); and
   select an operational channel for the C2C pair based on the range measurements.

2. The device of claim 1, wherein the determination is based on 6 GHz C2C operation.

3. The device of claim 1 or claim 2, wherein the processing circuitry is further configured to identify individual client station device (STA) request for a C2C pair channel assignment as belonging to the pair of C2C devices.

4. The device of any one of claims 1 to 3, wherein the range measurements comprise fine timing measurements.

5. The device of any one of claims 1 to 4, wherein the operational channel is selected based on individual locations of the pair of C2C devices.

6. The device of any one of claims 1 to 5, wherein the processing circuitry is further configured to identify the pair of C2C devices based on a received identifier representative of the pair.

7. The device of claim 6, wherein the processing circuitry is further configured to receive a fine timing measurement request frame from one of the pair of C2C devices, wherein the received fine timing measurement request frame comprises the received identifier representative of the pair.

8. The device of claim 7, wherein the received fine timing measurement request frame comprises a channel usage element.

9. The device of claim 7 or claim 8, wherein the identifier is obtained using a hash function with concatenation of medium access control (MAC) addresses of each of the C2C devices.

10. The device of any one of claims 7 to 9, wherein the fine timing measurement request frame further comprises a field representative of a function used to generate the identifier.

11. The device of any one of claims 1 to 10, wherein the processing circuitry is configured to select an allowed transmit power level for the C2C pair based on the range measurements.

12. An apparatus of an access point (AP) configured for operation in an IEEE 802.11 based network, the apparatus comprising: a radio frequency (RF) interface and the device of any one of claims 1 to 11.

13. The apparatus of claim 12, wherein the processing circuitry is further configured to cause the AP to correlate the C2C devices of the C2C pair via further APs of the IEEE 802.11 based network.

14. A non-transitory computer-readable medium storing computer-executable instructions which when executed by one or more processors result in performing operations comprising:

determining a pair of client to client (C2C) devices based on range measurements to a set of access points (APs); and

selecting an operational channel for the C2C pair based on the range measurements.

15. A method comprising:

determining, by one or more processors, a pair of client to client (C2C) devices within an indoor environment based on range measurements to a set of access points (APs); and

selecting an operational channel for the C2C pair based on the range measurements.

FIG. 1

FIG.2

301
AP1

302
STA

FTM Req
(Channel usage element)
C2C Pair ID

FTM Rsp (AP list)

Bi-directional FTM

Channel usage Rsp
(ch. + PWR level)

Bi-directional FTM (con.)

## FIG. 3

411
AP1

401
STA 1

402
STA 2

412
AP2

FTM Req
(Channel usage element)
C2C Pair ID

C2C Pair ID Hash (S1,S2)

FTM Req
(Channel usage element)
C2C Pair ID

FTM Rsp (AP list)

FTM Rsp (AP list)

Bi-directional FTM

Bi-directional FTM

Channel usage Rsp

Channel usage Rsp

(ch. + PWR level)

(ch. + PWR level)

Bi-directional FTM (con.)

Bi-directional FTM (con.)

## FIG. 4

| Category | Public Action | Trigger | LCI Measurement Request (optional) | Location Civic Measurement Request (optional) | Fine Timing Measurement Parameters (optional) |
|---|---|---|---|---|---|
| Octets:   1 | 1 | 1 | variable | variable | variable |

| Ranging Parameters (optional) | LCI Report (optional) | Location Civic Report (optional) | Channel Usage | C2C Pair ID |
|---|---|---|---|---|
| Octets:   variable | variable | variable | variable | 8 |

# FIG. 5

| Element ID | Length | Element ID Extension | Function | C2C Pair ID |
|---|---|---|---|---|
| Octets:   1 | 1 | 1 | 1 | 4 |

# FIG. 6

| Value | Function type |
|---|---|
| 0 | Cantor Paring function |
| 1-255 | Reserved |

# FIG. 7

800

| determine a pair of client to client (C2C) devices within an indoor environment based on range measurements to a set of access points (APs) | 802 |
|---|---|

| select an operational channel for the C2C pair based on the range measurements | 804 |
|---|---|

# FIG. 8

900

901

910

TRANSCEIVER

902

COMMUNICATIONS CIRCUITRY

MEMORY 908

909

PROCESSING CIRCUITRY

FIG. 9

FIG. 10

FIG. 11

FIG. 12

FIG. 13

FIG. 14

Europäisches
Patentamt

European
Patent Office

Office européen
des brevets

# EUROPEAN SEARCH REPORT

Application Number

EP 23 16 2009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/235255 A1 (ANSARI IMRAN [IN] ET AL) 29 July 2021 (2021-07-29)<br>* paragraph [0030] *<br>* paragraph [0038] – paragraph [0039] *<br>* paragraph [0046] – paragraph [0048] *<br>* paragraph [0066] – paragraph [0070] *<br>----- | 1-8, 10-15 | INV.<br>H04W64/00<br>H04W76/14 |
| Y | US 2022/078727 A1 (CHENNICHETTY PRAKASH [IN] ET AL) 10 March 2022 (2022-03-10)<br>* paragraph [0121] – paragraph [0132] *<br>* paragraph [0169] – paragraph [0172] *<br>----- | 1-8, 10-15 | |
| A | US 2021/168712 A1 (CHERIAN GEORGE [US] ET AL) 3 June 2021 (2021-06-03)<br>* paragraph [0108] – paragraph [0109] *<br>* paragraph [0150] – paragraph [0152] *<br>----- | 1-15 | |
| A | US 2019/098565 A1 (CHERIAN GEORGE [US] ET AL) 28 March 2019 (2019-03-28)<br>* paragraph [0066] – paragraph [0068] *<br>----- | 1-15 | |

TECHNICAL FIELDS
SEARCHED (IPC)

H04W

The present search report has been drawn up for all claims

| Place of search | Date of completion of the search | Examiner |
|---|---|---|
| Munich | 19 October 2023 | Straniero, Roberto |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 2009

19-10-2023

| Patent document cited in search report | | Publication date | Patent family member(s) | | Publication date |
|---|---|---|---|---|---|
| US 2021235255 | A1 | 29-07-2021 | NONE | | |
| US 2022078727 | A1 | 10-03-2022 | CN | 116075740 A | 05-05-2023 |
| | | | EP | 4209069 A1 | 12-07-2023 |
| | | | US | 2022078727 A1 | 10-03-2022 |
| | | | WO | 2022051051 A1 | 10-03-2022 |
| US 2021168712 | A1 | 03-06-2021 | CN | 114667788 A | 24-06-2022 |
| | | | EP | 4070603 A1 | 12-10-2022 |
| | | | KR | 20220106745 A | 29-07-2022 |
| | | | TW | 202127923 A | 16-07-2021 |
| | | | US | 2021168712 A1 | 03-06-2021 |
| | | | US | 2023209466 A1 | 29-06-2023 |
| | | | WO | 2021113080 A1 | 10-06-2021 |
| US 2019098565 | A1 | 28-03-2019 | US | 2019098565 A1 | 28-03-2019 |
| | | | US | 2020344677 A1 | 29-10-2020 |
| | | | US | 2022338109 A1 | 20-10-2022 |
| | | | WO | 2019067581 A1 | 04-04-2019 |

EPO FORM P0459

For more details about this annex : see Official Journal of the European Patent Office, No. 12/82